(19) Europäisches Patentamt

European Patent Office

Office européen des brevets

(11) EP 1 635 576 A1

(12) EUROPEAN PATENT APPLICATION

(43) Date of publication:
15.03.2006 Bulletin 2006/11

(51) Int Cl.:
H04N 7/26 (2006.01)

(21) Application number: 05019975.1

(22) Date of filing: 14.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 14.09.2004 JP 2004266653

(71) Applicant: Ricoh Company, Ltd.
Tokyo 143-8555 (JP)

(72) Inventor: Nomizu, Yasuyuki
Ebina-shi
Kanagawa (JP)

(74) Representative: Schwabe - Sandmair - Marx
Stuntzstrasse 16
81677 München (DE)

(54) **Image processing device and image processing program**

(57) In an image processing device, a block-basis edit processing unit performs a block-basis edit processing of specific blocks in an initial codestream of compression coded image data in a predetermined format to create blocks of edited code data. A codestream control unit combines the edited code data of the blocks created by the block-basis edit processing unit and non-edited code data of remaining blocks in the initial codestream which are not subjected to the edit processing, to create a new codestream of edited compression coded image data.

## FIG.16

EP 1 635 576 A1

**Description**

BACKGROUND OF THE INVENTION

1. Field of the Invention

The present invention relates to an image processing device, an image processing program and a computer-readable recording medium which perform a block-basis editing of specific blocks in a codestream of compression coded image data according to JPEG2000 algorithm.

2. Description of the Related Art

There is known JPEG2000 algorithm which is considered as the compression coding algorithm which encodes a multi-level image (especially color image) reversibly, and made into the standard system by the ITU-T and the ISO. Refer to the ISO 15444-1 JPEG2000 Image Coding System (JPEG2000).

Digital image processing systems in recent years have a tendency which makes the resolution high or increases the number of gradations for higher quality of image. While the quality of image improves because the amount of information contained in the encoded image data increases by this tendency, there is a problem that the amount of information of the image increases.

If the image which conventionally has a value of two gradations (white or black) is made into an image having a value of 256 gradations, the amount of information is increased by 8 times. If the amount of information is increased by 8 times, the storage capacity needed to store the image data is also increased by 8 times. There is a problem that the manufacture cost of the system increases. In order to reduce the storage capacity, the compression coding of an image is carried out.

One of such compression coding algorithms is the technology for encoding a multi-level image efficiently. A representative example of the compression coding algorithm of multi-level image (color image being also included) is the JPEG algorithm which is recommended as the standard by the ISO and ITU-T.

In the JPEG algorithm, there are a DCT system which is the baseline system and a DPCM system which is the optional system. The former is the irreversible compression coding algorithm (called a lossy coding algorithm) which carries out encoding by reducing part of the amount of information of the original image in such a manner that the quality of image is not spoiled using the human eyes' vision properties. The latter is a reversible compression coding algorithm (called a lossless compression coding algorithm) which carries out encoding without spoiling the amount of information of the original image.

The DCT system carries out the encoding of the image information after the image information is converted into frequency information using a discrete cosine transform. On the other hand, the DPCM system predicts a target pixel level from the neighboring pixels and carries out the encoding based on the prediction error.

If the quality of image is considered more important, using an efficient DCT system is appropriate. If the storage of image information is considered more important, using a reversible DPCM system is appropriate since the DCT system is irreversible.

Although the ideal system is a system which is reversible and has high efficiency, there is a problem that a high efficiency cannot be acquired with the reversible system such as the existing DPCM system. The current trend is using the DCT system for compression of a multi-level image with a comparatively large number of gradations which is usually used in a personal computer (PC) etc.

However, in the case of the DCT system, if the compressibility is made high, a characteristic block distortion or a mosquito noise occurs at the contour part, and the quality of image will deteriorate extremely. Especially, in the case of a character image, that tendency is remarkable and the problem of the quality of image becomes serious.

Although the JPEG algorithm is the optimal system for the uses in which the storage capacity of an image is reduced, it is not the best for the uses, such as image edit processing, etc. which are used by a digital copier. This is because the JPEG algorithm cannot specify the position of the image in the state of the codestream. In other words, it is impossible for the JPEG algorithm to carry out a decode processing of only an arbitrary portion of a specified image.

Therefore, in order to perform the edit processing of compression coded image data, it is necessary that the entire image data be decoded, and the edit processing be performed for the reconstructed image after the decoding. And, if required, the reconstructed image after the editing is again subjected to the compression coding. There is a problem that the memory with a large storage capacity for storing the reconstructed image after the decoding is needed. For example, in a case of an A4-size, 600-dpi, RGB color image, the storage capacity of about 100 M bytes is required.

One of the countermeasures for solving the above problem of the storage capacity of the memory when performing the edit processing is to use a fixed-length compression coding algorithm. The compression coding may be divided into a variable length image coding algorithm and a fixed length image coding algorithm depending on the length of the code word after the coding.

The advantages of the former are that the encoding efficiency is higher than that of the latter and the reversible coding is possible. On the other hand, the advantages of the latter are that the position of the image before the coding can be specified in the state of the codestream and the decoding of only the arbitrary portion of the image is possible. This means that the edit processing of the image can be carried out without changing the state of the codestream.

However, there is a problem that the encoding efficiency is generally low and the reversible coding is difficult compared with the variable length coding.

In order to eliminate the above problems of the JPEG system, the compression coding algorithm called JPEG2000 attracts attention in recent years. JPEG2000 algorithm is the transform compression coding algorithm using the wavelet transform, and it is predicted that JPEG2000 algorithm will replace the JPEG algorithm in the field of static images including a color image from now on.

In addition to having eliminated the degradation of the image quality due to the low bit rate (which is the problem of the JPEG algorithm), JPEG2000 algorithm is provided with many new functions for practical uses.

One of such new functions included in JPEG2000 algorithm is the tile processing. In the tile processing, the image is divided into a number of rectangular small areas (tiles) and the encoding of each of the respective small areas is performed independently. It is possible to specify the area of the image in the state of the codestream by using the tile processing, and the edit processing of the image is attained without changing the state of the codestream.

However, there is still a problem also in the technology of JPEG2000. When the edit processing of a particular code block in the codestream is carried out, there is a case where the data amount of the code block after the editing is larger than the data amount of the code block before the editing.

In this case, in order to insert the new code block after the editing into the codestream, it is necessary to rearrange the codestream so that a part of the codestream needed for insertion of the new code block is created at the location of the subsequent code block data following the edited portion of the codestream.

If the processing on the memory is taken for an example, in order to secure a memory area required to insert the new code block data, the movement of code data on the memory is needed. JPEG2000 algorithm is highly efficient and provides various functions, and the processing thereof is complicated. When compared with that of the JPEG, JPEG2000 algorithm needs 4 or 5 times longer processing time in the processing of software.

When the above-mentioned edit processing is performed, the processing time becomes very long and a serious problem arises with respect to the operability of the user.

Moreover, as described above, it is possible to specify the area of the image in the state of the codestream by using the tile processing, and the edit processing of the image is attained without changing the state of the codestream. However, the complexity of processing is proportional to the processing time, and the processing of JPEG2000 becomes complicated. The problem remains unresolved in that the codestream must be rearranged in a certain case so as to create a part of the codestream needed for insertion of the new code block at the location of the subsequent code block data following the edited portion of the codestream.

## SUMMARY OF THE INVENTION

An object of the present invention is to provide an improved image processing device in which the above-described problems are eliminated.

Another object of the present invention is to provide an image processing device which efficiently performs, with high speed, a block-basis editing of specific blocks in a codestream of compression coded image data to create edited code blocks of a new codestream by combining the edited code blocks after the editing and the non-edited code blocks in the initial codestream.

In order to achieve the above-mentioned objects, the present invention provides an image processing device which comprises: a block-basis edit processing unit performing a block-basis edit processing of specific blocks in an initial codestream of compression coded image data in a predetermined format to create blocks of edited code data; and a codestream control unit combining the edited code data of the blocks created by the block-basis edit processing unit and non-edited code data of remaining blocks in the initial codestream which are not subjected to the edit processing, to create a new codestream of edited compression coded image data.

Moreover, in order to achieve the above-mentioned objects, the present invention provides a computer program product embodied therein for causing a computer to execute an image processing method, the

Moreover, in order to achieve the above-mentioned objects, the present invention provides a computer-readable recording medium embodied therein for causing a computer to execute a

According to the above-described image processing device of the invention, the edited code data of the blocks created by the block-basis edit processing unit are combined with the non-edited code data of the remaining blocks in the initial codestream which are not subjected to the edit processing, to create a new codestream of edited compression coded image data. One of the plurality of combining units which combines the edited code data of the created blocks with the non-edited code data of the remaining blocks is selected while monitoring the non-edited code data of the remaining blocks in the initial codestream before the editing, so that the time needed for the edit processing of the whole codestream is controlled to be near the shortest. Accordingly, it is possible to carry out high-speed edit processing efficiently.

## BRIEF DESCRIPTION OF THE DRAWINGS

Other objects, features and advantages of the present invention will be apparent from the following detailed description when reading in conjunction with the accompanying drawings.

FIG. 1 is a block diagram of an image processing system which utilizes the hierarchical coding algorithm which is the fundamental function of JPEG2000 algorithm.

FIG. 2 is a diagram for explaining the hierarchical coding algorithm and JPEG2000 algorithm.

FIG. 3 is a diagram for explaining the hierarchical coding algorithm and JPEG2000 algorithm.

FIG. 4 is a diagram for explaining the hierarchical coding algorithm and JPEG2000 algorithm.

FIG. 5 is a diagram for explaining the hierarchical coding algorithm and JPEG2000 algorithm.

FIG. 6 is a diagram for explaining the structure of one frame of the codestream produced by a tag processing unit in the system of FIG. 1.

FIG. 7 is a diagram for explaining an example of the codestream format according to JPEG2000 algorithm.

FIG. 8 is a diagram for explaining the main header in the codestream format of FIG. 7.

FIG. 9A and FIG. 9B are diagrams for explaining the tile-part header in the codestream format of FIG. 7.

FIG. 10 is a diagram for explaining the composition of the SOT marker segment.

FIG. 11 is a diagram for explaining the composition of the SIZ marker segment.

FIG. 12 is a diagram for explaining the positional relationship of an image area.

FIG. 13 is a diagram for explaining the positional relationship between the reference grid and the tiles.

FIG. 14 is a diagram for explaining the relations of the image, the tile, the sub-band, the precinct, and the code block.

FIG. 15 is a block diagram showing the composition of an image processing device in a preferred embodiment of the image processing device of the invention.

FIG. 16 is a block diagram of an embodiment of the block-basis edit processing unit in the image processing device of FIG. 15.

FIG. 17 is a diagram for explaining the composition of a tile part in the codestream according to JPEG2000 algorithm.

FIG. 18 is a flowchart for explaining an example of the processing of the block-basis edit processing unit in the image processing device of this embodiment.

FIG. 19 is a block diagram showing the composition of the codestream control unit in the image processing device of this embodiment.

FIG. 20A and FIG. 20B are diagrams for explaining an example of the processing of the image processing device of this embodiment when the amount of the code block after the editing is larger than the amount of the code block before the editing.

FIG. 21 is a diagram for explaining another example of the processing of the image processing device of this embodiment when the amount of the code block after the editing is larger than the amount of the code block before the editing.

FIG. 22A and FIG. 22B are diagrams for explaining an example of the processing of the image processing device of this embodiment when the amount of the code block after the editing is smaller than the amount of the code block before the editing.

FIG. 23 is a block diagram showing the composition of an image processing device in another preferred embodiment of the image processing device of the invention.

DETAILED DESCRIPTION OF PREFERRED EMBODIMENTS

To facilitate understanding of the subject matter of the invention, a description will be given of the outline of the hierarchical coding algorithm and JPEG2000 algorithm prior to giving a description of the preferred embodiments of the invention.

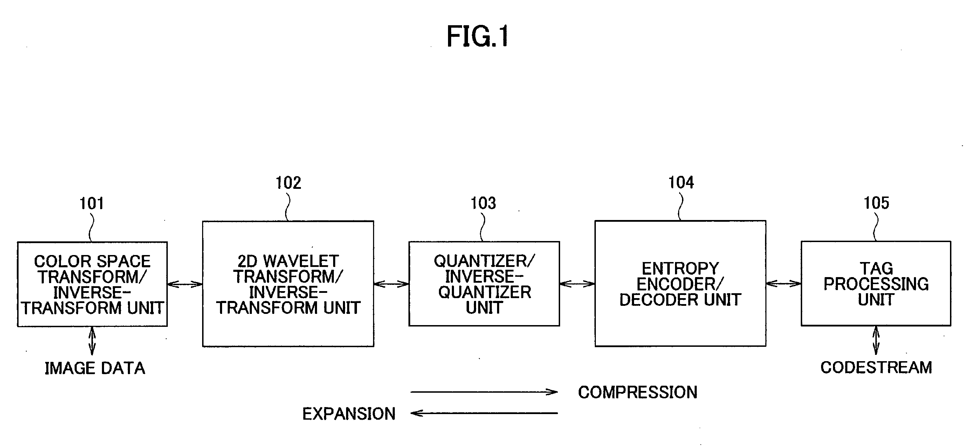

FIG. 1 shows an image processing system which utilizes the hierarchical coding algorithm which contains the fundamental coding functions according to JPEG2000 algorithm.

The image processing system of FIG. 1 comprises a set of function blocks which include a color-space transform (or inverse transform) unit 101, a 2-dimensional wavelet transform (or inverse transform) unit 102, a quantization (or inverse quantization) unit 103, an entropy coding (or decoding) unit 104, and a tag processing unit 105.

In the case of a conventional JPEG algorithm, the discrete cosine transform (DCT) is used. In the case of the system of FIG. 1, the discrete wavelet transform (DWT) is used as the hierarchical coding algorithm by the 2-dimensional wavelet transform (or inverse-transform) unit 102.

Compared with the DCT, the DWT has the advantage that the quality of image in high compression ranges is high. This is because JPEG2000 algorithm, which is the succeeding algorithm of JPEG, has adopted the DWT.

Moreover, with the hierarchical coding algorithm, another difference is that the system of FIG. 1 is provided with the tag processing unit 105 as an additional function block, in order to perform tag (headers, SOC, EOC) formation and codestream formation at the last stage of the system.

In the tag processing unit 105, at the time of image compression operation, compressed image data are generated as a codestream, and the interpretation of the codestream required for image expansion is performed at the time of image expansion operation.

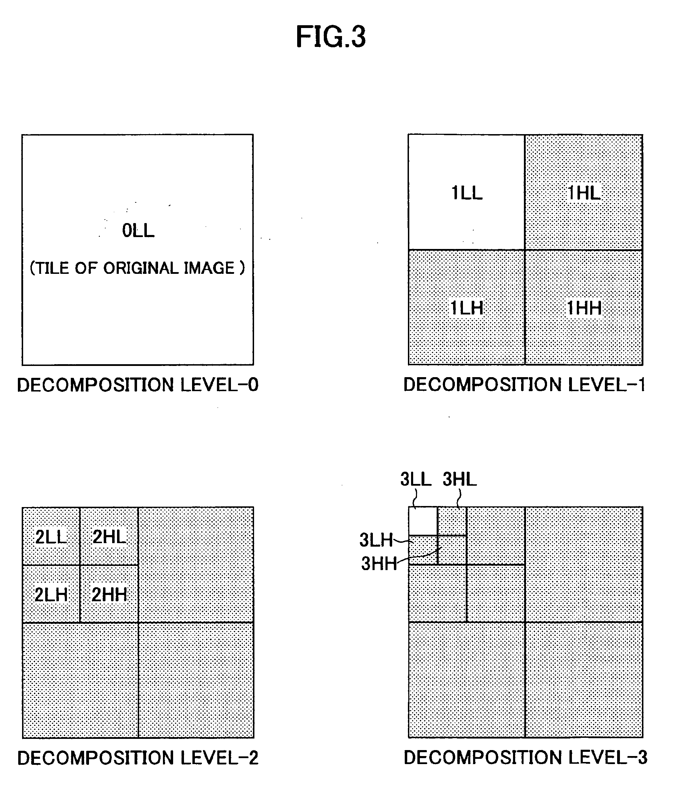

JPEG2000 algorithm provides various convenient functions with the codestream. For example, as shown in FIG. 3, compression/expansion operation of the still image can be freely stopped at an arbitrary stage (decomposition level) corresponding to the octave division in the DWT in the block base.

The color-space transform (or inverse-transform) unit 101 is connected to the I/O part of the original image in many cases.

The color-space transform unit 101 is equivalent to, for example, the part which performs the color-space transform to the RGB colorimetric system which includes each component of R(red)/G(green)/B (blue) of the primary-colors system, or the YUV or YCbCr colorimetric system which includes each component of Y(yellow)/M(magenta)/C(cyanogen) of the complementary-colors system from the YMC colorimetric system.

Moreover, the color-space inverse-transform unit 101 is equivalent to the inverse color-space transform that is the reverse processing to the above color-space transform.

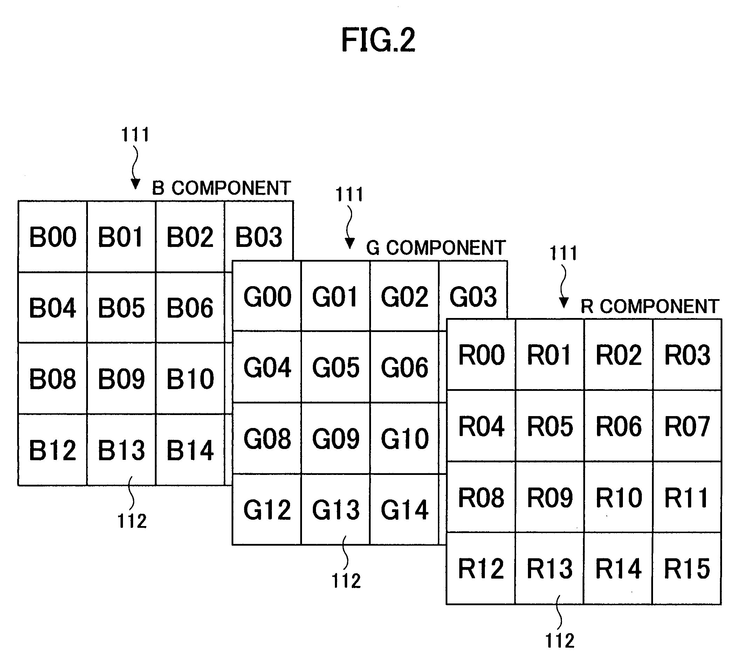

Next, a description will be given of the color space transform (or inverse-transform) unit 101 and the wavelet transform (or inverse transform) unit 102 with reference to FIG. 2 and FIG. 3.

Generally, the color image is divided into rectangular portions where each color component (RGB primary-colors system) of the original image is arranged as shown in FIG. 2.

The rectangular portion is generally called the block or the tile, and it is common to call it the tile as for this divided rectangular portion according to JPEG2000. It is hereinafter made to describe such a divided rectangular portion as being the tile. In the example of FIG. 2, each component 111 (RGB) is divided in each direction into 4x4 rectangular portions 112. Each of the 16 pieces of the rectangles 112 is called the tile.

Each tile 112 of the component 111 (which is, in the example of FIG. 2, R00, R01, ..., R15, G00, G01 , ..., G15, B00, B01, ..., B15) serves as the base unit at the time of performing the compression or expansion process of the image data. Therefore, the compression or expansion operation of the image data is performed independently for every component and for every tile.

After the data of each tile 112 of each component 111 are inputted into the color-space transform (or inverse-transform) unit 101 of FIG. 1, and color-space transform is performed at the time of the coding of the image data, 2-dimensional wavelet transform (forward transform) is performed by the 2-dimensional wavelet transform 112, and space division is carried out in the frequency domain.

FIG. 3 shows the sub-band in each decomposition level in case the number of decomposition levels is 3.

The tile of the original image is initially obtained. To the original image tile (0LL) (decomposition level 0), 2-dimensional wavelet transform is performed by the wavelet transform unit 102 and the sub band (1LL, 1HL, 1LH, 1HH) shown in the decomposition level 1 is separated.

Subsequently, to low-frequency component 1 LL in this layer, 2-dimensional wavelet transform is performed by the wavelet transform unit 102 and the sub band (2LL, 2HL, 2LH, 2HH) shown in the decomposition level 2 is separated.

Similarly, 2-dimensional wavelet transform is performed by the wavelet transform unit 102 also to low-frequency component 2LL, and the sub band (3LL, 3HL, 3LH, 3HH) shown in the decomposition level 3 is separated one by one.

As shown in FIG. 3, the sub band set as the object of the coding in each decomposition level is indicated by the dotted area.

For example, when the number of decomposition levels is set to 3, the sub band components (3HL, 3LH, 3HH, 2HL, 2LH, 2HH, 1 HL, 1LH, 1 HH) indicated by the dotted area serve as the candidate for the coding, and the sub band component 3LL is not coded.

Subsequently, the bit set as the object of the coding in the turn of the specified coding is appointed, and the context is generated from the bit of the object bit circumference by the quantization (inverse quantization) unit 103 shown in FIG. 1.

The wavelet coefficients after the processing of the quantization are divided into the rectangles which are called the precincts and not overlapping for each of the sub bands. This is introduced in order to use the memory efficiently by implementation.

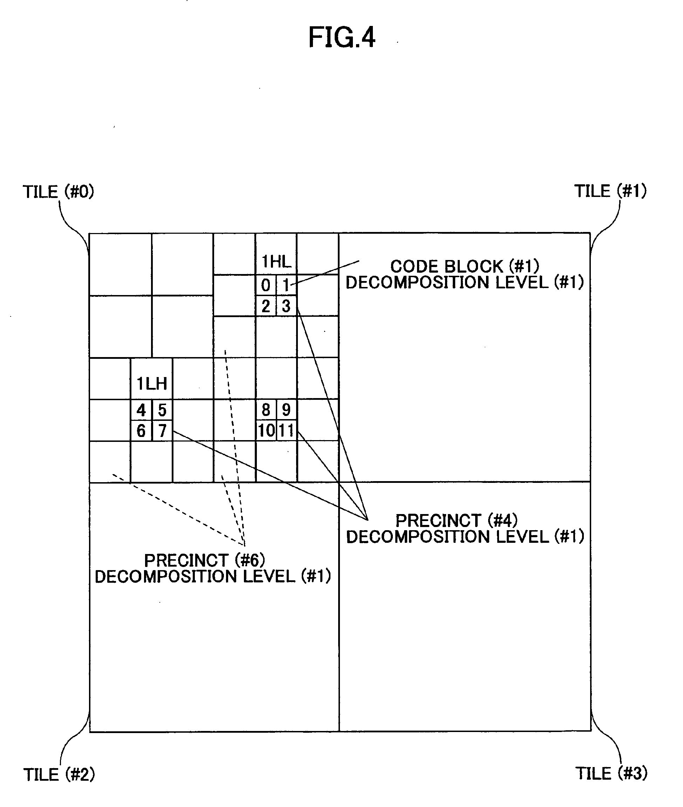

As shown in FIG. 4, one precinct includes the three rectangular portions which are positionally in agreement.

Furthermore, each precinct is divided into the code block of the rectangle not overlapping. This serves as the base unit at the time of performing entropy coding.

The wavelet coefficients after the discrete wavelet transform (DWT) is performed may be subjected to the quantization and entropy encoding. However, according to JPEG2000 algorithm, it is also possible that the wavelet coefficients are divided into the bit-plane components, and the ordering of the bit-plane components is performed for each pixel or code block, in order to raise the efficiency of encoding.

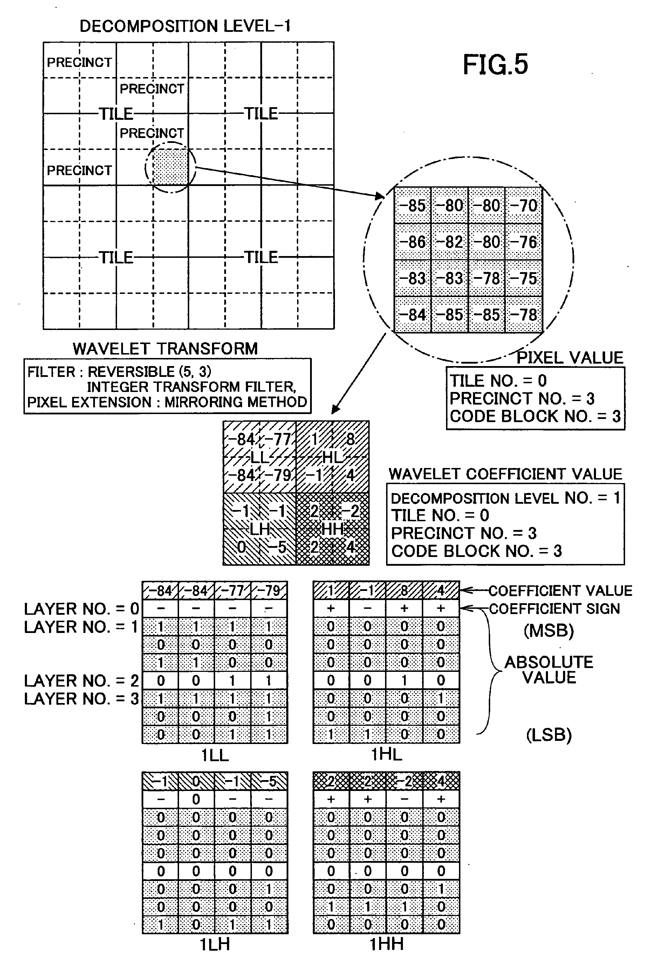

FIG. 5 shows the procedure of the wavelet coefficient division and the bit-plane component ordering. In the example of FIG. 5, the original image containing 32 x 32 pixels is divided into four tile components each containing 16 x 16 pixels. The magnitude of each precinct of decomposition level 1 is 8 x 8 pixels, and the magnitude of each code block of decomposition level 1 is 4 x 4 pixels. The precinct number and the code block number are allocated in the order of the raster scanning. The mirroring method is used for the pixel extension beyond the tile component. The wavelet transform is performed with the reversible (5, 3) integer transform filter, so that the wavelet coefficients of decomposition level 1 are obtained.

The outline of the typical layers with respect to the tile number 0/the precinct number 3/the code block number 3 is also shown in FIG. 5. The structure of the layers can be easily understood by viewing the wavelet coefficients in the horizontal direction (the bit-plane direction). A single layer is composed of a number of the bit-plane components. In the example of FIG. 5, each of the layer number 0, 1, 2, 3 is composed of the three bit-plane components 1, 3, 1. The layer containing the bit-plane components nearer to the LSB (least significant bit) is subjected to the quantization earlier, while the layer containing the bit-plane components nearer to the MSB (most significant bit) is not subjected to the quantization and remains unchanged. The method which truncates the layer near to the LSB is called the truncation, and it is possible to control the quantization ratio appropriately by using the truncation.

In the entropy coding/decoding unit 104 shown in FIG. 1, probability presumption from the context and the obj ect bit enables the encoding of the tile of each component to be performed. In this way, coding processing of the tiles about all the components of the original image is performed.

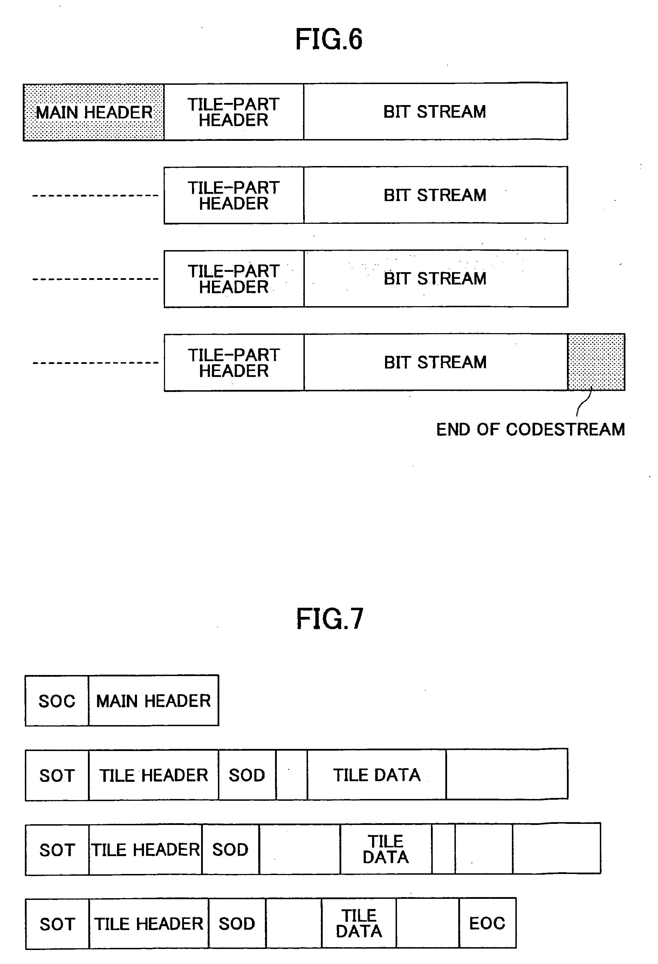

FIG. 6 shows the composition of one frame of the codestream that is produced by the tag processing unit 105.

The tag information, called the main header, is disposed at the beginning of this codestream. After the main header, the tile-part header of the codestream (bit stream) of each tile, and the coding data of each tile are continuously disposed. And, the tag (end of codestream) is disposed at the end of the codestream.

On the other hand, at the time of decoding of the codestream, the image data is generated from the codestream of each tile of each component which is the reverse processing to the coding of the image data.

In this case, the tag processing unit 105 interprets the tag information added to the codestream that is inputted from the exterior, decomposes the codestream into the codestream of each tile of each component, and performs decoding processing for every codestream of each tile of each of that component.

While the location of the bit set as the object of decoding in the turn based on the tag information in the codestream is defined at this time, the context is generated in quantization and the inverse quantization unit 103 from the row of the circumference bit (decoding is already completed) of the object bit position.

In the entropy coding/decoding unit 104, the codestream is decoded by probability presumption from this context, the object bit is generated, and it is written in the location of the object bit.

Thus, the space division of the decoded data is carried out for every frequency band, each tile of each component of the image data is restored in this by performing the 2-dimensional wavelet inverse transformation at the 2-dimensional wavelet inverse-transform unit 102.

The restored data are changed into the image data of the original colorimetric system by the color-space inverse-transform unit 101.

In the entropy coding/decoding unit 104 of FIG. 1, probability presumption performs coding to the tile of each component from the context and the object bit. In this way, coding processing is performed per tile about all the components of the subject-copy image.

Finally, the tag processing unit 105 performs processing which attaches the tag to the coded data from the entropy coding unit to form the codestream.

The structure of the codestream is briefly shown in FIG. 6. As shown in FIG. 6, the tag information called header is added to the head of the codestream, and the head of the partial tile which constitutes each tile, and the coded data of each tile continues after that. And the tag is again put on the termination of the codestream.

On the other hand, at the time of the decoding, the image data is generated from the codestream of each tile of each component contrary to the time of coding. As shown in FIG. 1, in this case, the tag processing unit 105 interprets the tag information added to the codestream inputted from the exterior, and decomposes the codestream into the code stream of each tile of each component, and decoding processing is performed for every code data of each tile of each component.

The position of the bit set as the object of the decoding in the sequence based on the tag information in the codestream is defined. In the quantization/inverse-quantization unit 103, the context is generated from the list of the circumference bits (the decoding of which is already completed) of the object bit position.

In the entropy coding/decoding unit 104, the codestream is decoded by probability presumption from this context and the codestream so that the object bit is generated and it is written in the presumed position of the object bit.

The space division of the decoded data is carried out for every frequency band, and each tile of each component of the image data is restored in this way by performing the 2-dimensional wavelet inverse transformation at the 2-dimensional wavelet transform/inverse-transform unit 102. The restored data is transformed into the image data of the original color system at the color-space transform/inverse-transform unit 101.

The above description relates to the outline of JPEG2000 algorithm that deals with the image processing method for a still image, or a single frame. It is extended to the Motion-JPEG2000 algorithm which deals with the image processing method for a moving picture including a plurality of frames.

Next, a description will be given of an example of the codestream format according to JPEG2000 algorithm.

FIG. 7 shows an example of the codestream format according to JPEG2000 algorithm. As in the codestream format of FIG. 7, the codestream starts with the SOC (start of codestream) marker which indicates the beginning of the codestream. After the SOC, the main header which describes the parameters of coding and the parameters of quantization is followed, and the actual code data of the codestream is followed further.

The actual code data starts with the SOT (start of tile-part) marker, and further includes the tile header, the SOD (start of data) marker, and the tile data (code data).

After the code data that is equivalent to the whole image data, the EOC (end of codestream) marker which indicates the end of the codestream is added.

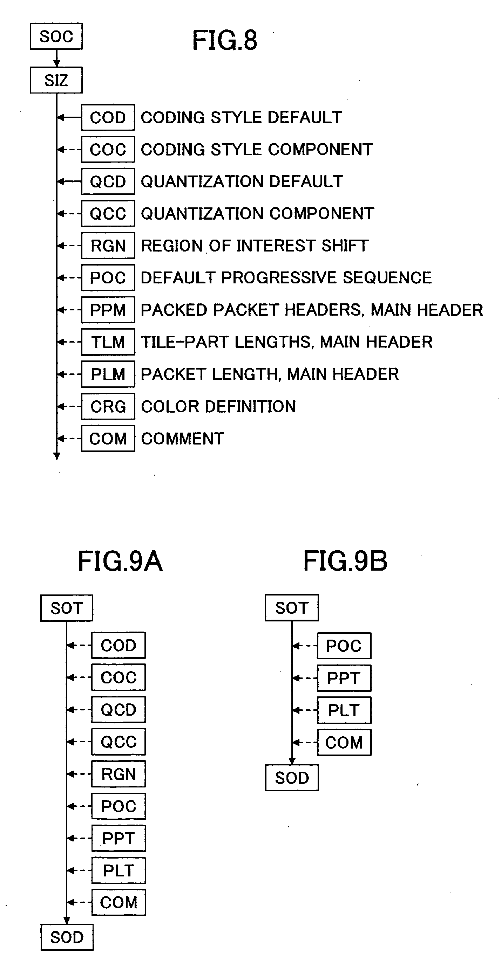

FIG. 8 shows the composition of the main header in the codestream format of FIG. 7.

As shown in FIG. 8, the main header comprises the COD and the QCD, which are the indispensable marker segments, and the COC, the QCC, the RGN, the POC, the PPM, the TLM, the PLM, the CRG and the COM which are the optional marker segments.

FIG. 9A and FIG. 9B show the composition of a tile-part header in the codestream of FIG. 9.

FIG. 9A shows the marker segments added to the head of the tile-part header. As shown in FIG. 9A, any of the marker segments of COD, COC, QCD, QCC, RGN, POC, PPT, PLT, and COM (all optional) can be used.

On the other hand, FIG. 9B shows the marker segments added to the head of the divided tile partial sequence when the inside of the tile is divided into a plurality of blocks. As shown in FIG. 9B, any of the marker segments of POC, PPT, PLT, and COM (all optional) can be used.

The marker and marker segments which are used according to JPEG2000 will now be explained.

Every marker comprises 2 bytes (the first byte is "0xff" and the second byte has any value in the range "0x01" to "0xfe"). The markers and marker segments can be classified into the following six styles:

(1) the frame separator (delimiting)
(2) the position of the image, the size-related information (fixed information)
(3) the information on a coding function (functional)
(4) error resilience (in-bit stream)
(5) the pointer of a bit stream (pointer)
(6) auxiliary information (informational)

Among these, the markers related to this invention are (1) and (2). A detailed description thereof will be given below.

First, the delimiting marker and marker segment will be explained. The delimiting marker and the marker segment are indispensable, and there are SOC, SOT, SOD, and EOC. A codestream start marker (SOC) is added to the head of a codestream. A tile start marker (SOT) is added to the head of a tile-part codestream.

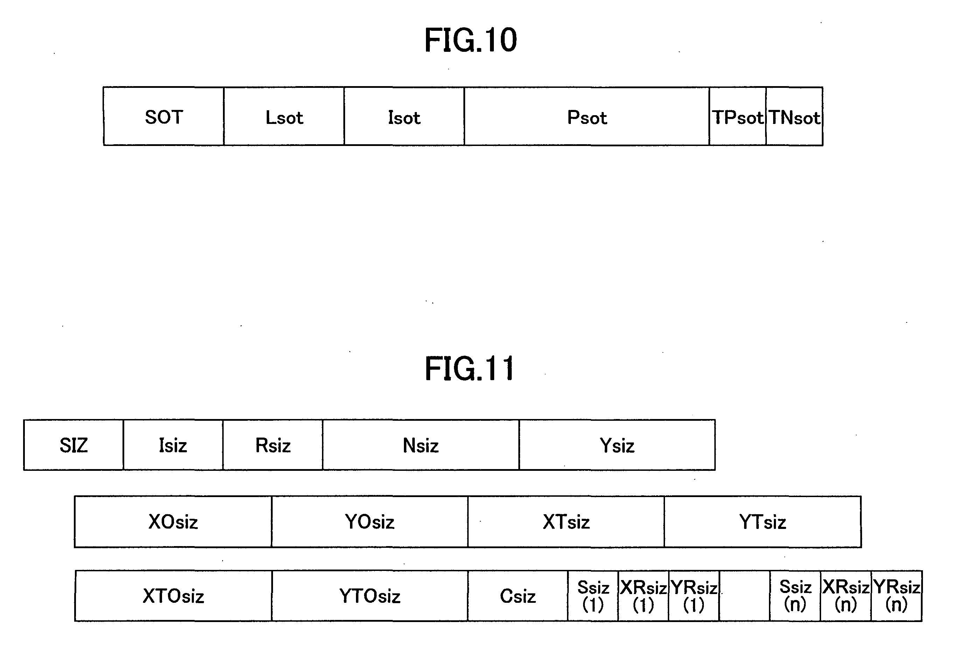

FIG. 10 shows the composition of this SOT marker segment. In the SOT marker segment of FIG. 10, "Lsot" indicates a length of the marker segment concerned, "Isot" indicates a tile number (this number refers to the tiles in raster order starting at the number 0), "Psot" indicates a tile length, "TPsot" indicates a tile part instance, and "TNsot" indicates the number of tile parts of a tile in the codestream.

Next, the fixed information marker segment will be explained. This is a marker which describes the information about the image, and a SIZ marker segment corresponds to this. The SIZ marker segment is required in the main header immediately after the SOC marker segment. The length of the SIZ marker segment varies depending on the number of components.

FIG. 11 shows the composition of the SIZ marker segment. In the SIZ marker segment of FIG. 11, "Isiz" indicates a length of the marker segment concerned (not including the marker), "Rsiz" indicates capabilities of the codestream, "Xsiz" indicates a horizontal length of the reference grid, "Ysiz" indicates a perpendicular length of the reference grid, "XOsiz" indicates a horizontal offset from the origin (zero) of the reference grip to the left side of the image area, "YOsiz" indicates a perpendicular offset from the origin (zero) of the reference grid to the top side of the image area, "XTsiz" indicates a horizontal length of one reference tile with respect to the reference grid, "YTsiz" indicates a perpendicular length of one refenrece tile with respect to the reference grid, "XTOsiz" indicates a horizontal offset from the origin (zero) of the reference grid to the left size of the first tile, "YTOsiz" indicates a perpendicular offset from the origin (zero) of the reference grid to the top side of the first tile, "Csiz" indicates the number of components, "Ssiz(i)" indicates the precision in bits and the sign of the i-th component, "XRsiz(i)" indicates a horizontal separation of a sample of the i-th component with respect to the reference grid, and "TRsiz(i)" indicates a perpendicular separation of a sample of the i-th component with respect to the reference grid.

The positional relationship of the image area and a tile in JPEG2000 will be explained.

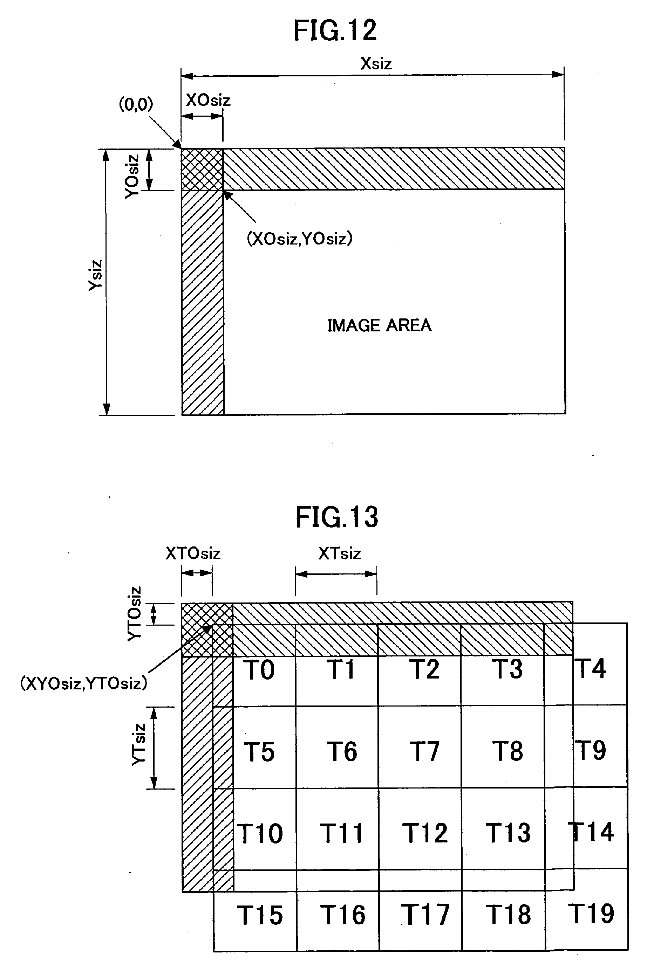

As is apparent from the composition of the marker segment shown in FIG. 11, in JPEG2000, the position of the image or the tile is expressed using the axis of coordinates called reference grid. FIG. 12 shows the positional relationship of an image area.

As shown in FIG. 12, by considering the upper left corner of the reference grid as the origin (0, 0), an image is specified on the reference grid with the relative position (XOsiz, YOsiz) of the upper left corner of the image with respect to the origin (zero). The actual size of the image area is determined by the formula: (Xsiz - XOsiz) x (Ysiz - YOsiz).

As described above, the image arranged on the reference grid is divided into a number of rectangular small areas called "tiles" for the processing at the time of the compression coding. FIG. 13 shows the positional relationship between the reference grid and the tiles.

Since there is the necessity that a tile can be encoded or decoded solely or independently, referring to the pixels exceeding the boundary of that tile is impossible. Every tile is XTsiz reference grid points wide and YTsiz reference grid points high. The upper left corner on the first tile is offset from the upper left corner of the reference grid by (XTOsiz, YTOsiz).

The tile grid offsets (XTOsiz, YTOsiz) are constrained to be no greater than the image area offsets. This is expressed by the following formulas:

$$0 <= XTOsiz <= XOsiz;$$

$$0 <= YTOsiz <= YOsiz.$$

Also the tile size plus the tile offset shall be greater than the image area offset. This ensures that the first tile will contain at least one reference grid point from the image area. This is expressed by the following formulas:

$$XTsiz + XTOsiz > XOsiz;$$

$$YTsiz + YTOsiz > YOsiz.$$

The number of tiles in the X direction (horizontal number of tiles) is expressed by the formula: "horizontal number of tiles" = (Xsiz - XTOsiz)/XTsiz, and the number of tiles in the Y direction (perpendicular number of tiles) is expressed by the formula: "perpendicular number of tiles" = (Ysiz - YTOsiz)/YTsiz.

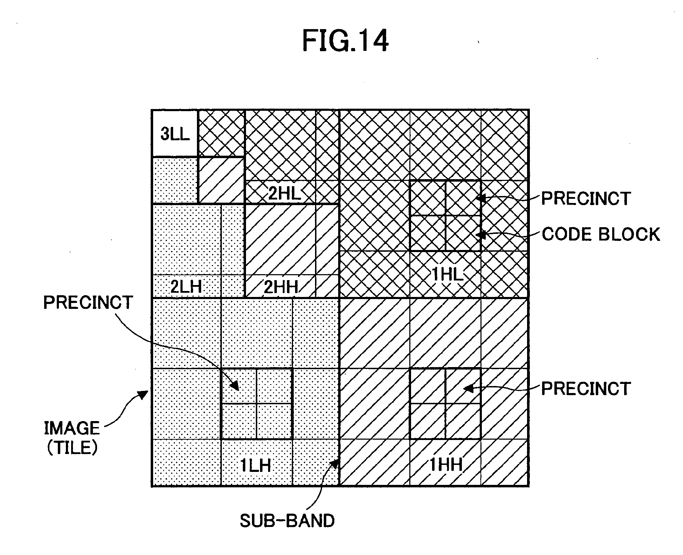

FIG. 14 shows the relations of the image, the tile, the sub-band, the precinct, and the code block. As shown in FIG. 14, the ranks of physical size are as follows: "image" >= "tile" > "sub-band" >= "precinct" >= "code block".

A "tile" is a rectangular array of points on the reference grid into which an "image" is divided, and, in the case of the number of partitions = 1, the condition: "image" = "tile" is met. A tile-component means all the samples of a given component in a tile. There is a tile-component for every component and for every tile. A "precinct" is a sub-division of a tile-component within each resolution, used for limiting the size of packets. A "sub-band" is a group of transform coefficients resulting from the same sequence of low-pass and high-pass filtering operations, both vertically and horizontally. A precinct consists of either a group of HL, LH and HH sub-bands or a single LL sub-band. A "code block is a rectangular grouping of coefficients from the same sub-band of a tile-component.

A packet is a part of the bit stream comprising a packet header and the coded data from one layer of one decomposition level of one component of a tile. A layer is a collection of coding pass compressed data from one, or more code-blocks of a tile-component. Layers have an order for encoding and decoding that must be preserved. Since a layer is a part of codestream of the bit plane of the whole image roughly, if the number of layers decoded increases, the quality of image becomes high. Therefore, if all the layers are collected, it becomes a codestream of all the bit planes of the image whole region.

Next, a description will be given of the first preferred embodiment of the invention.

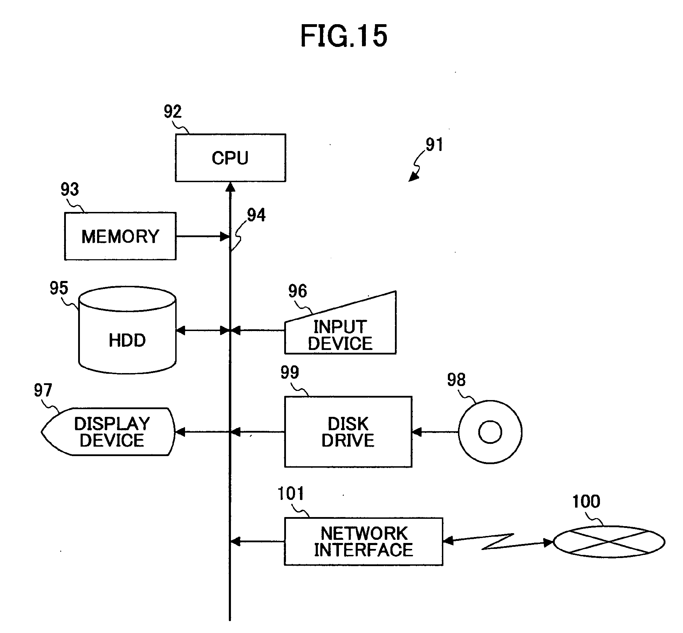

FIG. 15 shows the composition (electric connection) of an image processing system 91 in the first preferred embodiment of the invention.

A personal computer, a workstation, etc. may be used as the image processing system 91. As shown in FIG. 1, the image processing system 91 comprises the CPU 92 which performs various operations and intensively controls the components of the image processing system, and the memory 93 which includes various kinds of ROM and RAM. The CPU 92 and the memory 93 are interconnected by the bus 94.

Other components of the image processing system 91 connected to the bus 94 via predetermined interfaces include the magnetic storage 95 (hard disk drive), the network interface 101, the input unit 96 (such as a mouse, a keyboard, etc.), the display device 97 (such as a LCD and a CRT), and the disk drive 99 which reads a recording medium 98 (such as an optical disk). The network interface 101 is provided to connect the image processing system 91 with the external network 100 for communications with the network 100.

The network interface 101 is connectable with WAN, such as the Internet, through the network 100. As the recording medium 98, the media of various systems including optical disks, such as CD and DVD, magneto-optic disks, and flexible disks, may be used. As for the disk drive 99, any of an optical disk drive, a magnetic-optical disk drive, a flexible disk drive, etc. may be used according to the kind of the recording medium 98.

The image processing program according to the invention is stored in the magnetic storage 95. This image processing program may be read out from the recording medium 98 by the disk drive 99, or may be downloaded from WAN, such as the Internet, and such image processing program is installed in the magnetic storage 95. The image processing system 91 is set in an operable state by this installation. The image processing program may operate on a predetermined OS (operating system). The image processing program may constitute a part of specific application software.

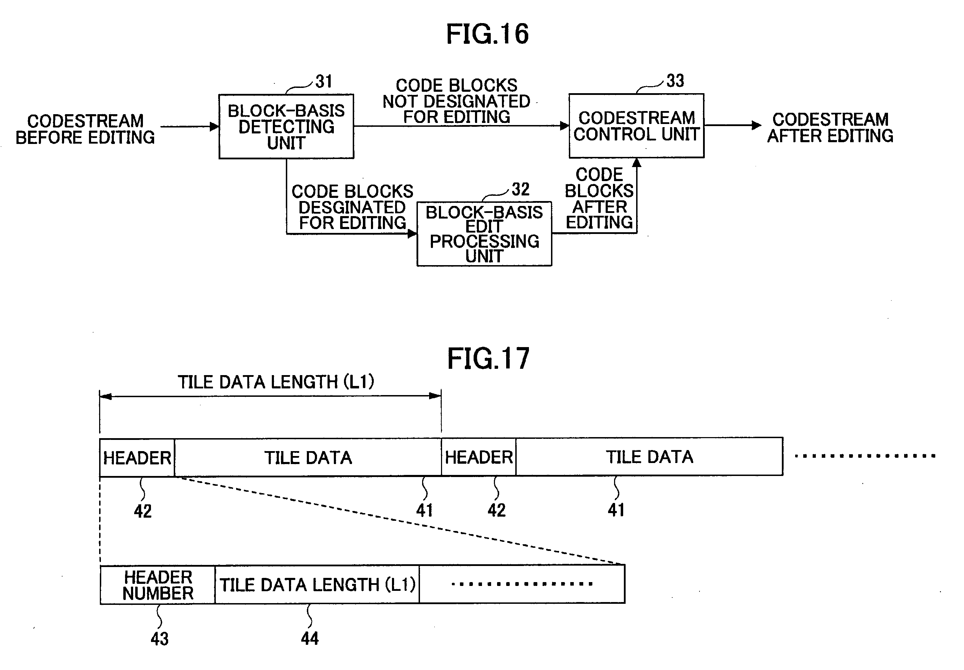

In the image processing system 91 of the above-described composition, the processing which will be later mentioned with reference to FIGs. 16 - 22B can be performed based on the image processing program.

FIG. 16 is a block diagram of the processing performed by the image processing system 91 of this embodiment based on the image processing program.

The image processing system 91 performs the block-basis edit processing with respect to the positions at which the original image is specified. As shown in FIG. 16, the image processing system 91 comprises a block-basis detecting unit 31, a block-basis edit processing unit 32, and a codestream control unit 33.

The block-basis detecting unit 31 receives a codestream before the edit processing (an initial codestream of compression coded image data created according to, for example, JPEG2000 algorithm) inputted by the image processing program, and extracts, from the codestream, specific blocks that are designated for the edit processing. The remaining blocks in the codestream that are not designated for the edit processing are sent to the codestream control unit 33.

The block-basis edit processing unit 32 performs the block-basis edit processing of the blocks extracted from the codestream by the block-basis detecting unit 31, and creates blocks of the edited code data as a result of the edit processing.

The codestream control unit 33 combines the edited code data of the blocks which are created by the block-basis edit processing unit 32 and the non-edited code data of the remaining blocks which are not designated for the edit processing, to create a new codestream of the edited compression coded image data.

Briefly speaking, the block-basis detecting unit 31 detects whether each block of the codestream inputted to the block-basis detecting unit 31 is designated for the edit processing. FIG. 17 shows the composition of a tile part in the codestream according to JPEG2000 algorithm.

Suppose that the JPEG2000 codestream using the tiles is taken for an example. As shown in FIG. 17, the header information 42 exists at the head part of the tile-part code data 41. In the header information 42, the header number 43 and the tile data information 44 which indicates the length of the tile data exist. Therefore, the above-mentioned detection of the block-basis detecting unit 31 can be easily carried out by receiving the header information 42 of each block and interpreting the same. If it is detected that one block is not designated for the edit processing, then the header information 42 of the following block can be detected speedily by using the information concerning the length of the tile-part code data 41. Therefore, the detection can be performed at high speed.

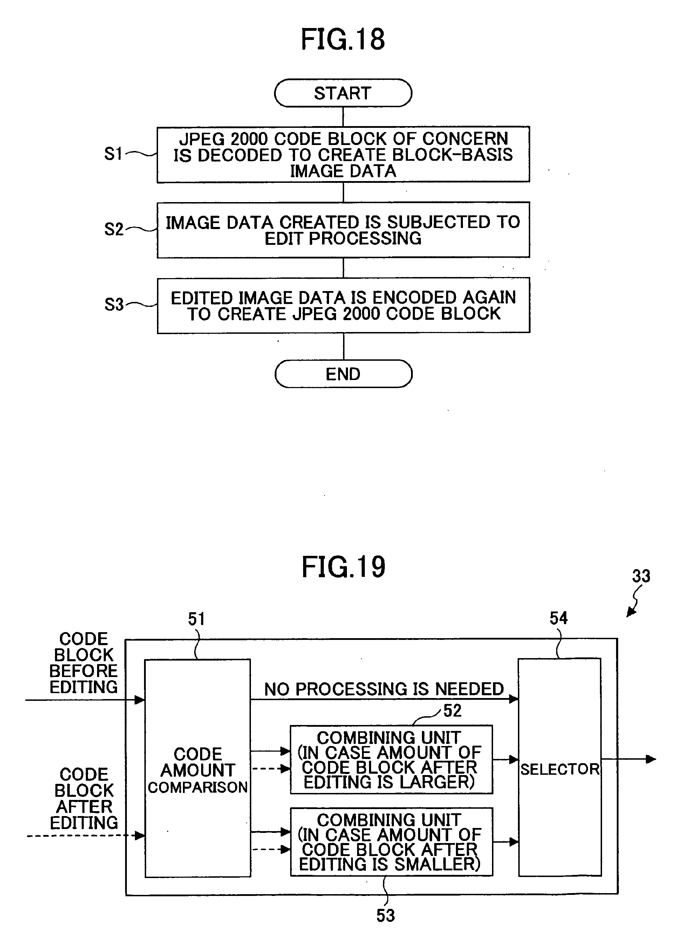

The code data of the blocks which are detected as being designated for the edit processing the block-basis detecting unit 31 are sent to the block-basis edit processing unit 32. In the block-basis edit processing unit 32, the predetermined block-basis edit processing of the specific blocks in the initial codestream is carried out. FIG. 18 is a flowchart for explaining an example of the processing of the block-basis edit processing unit 32 in the present embodiment.

As shown in FIG. 18, the block-basis edit processing unit 32 decodes the JPEG2000 code data of the block of concern to create a block-basis image data (step S1). Next, the block-basis edit processing unit 32 subjects the created image data to the edit processing (step S2).

Finally, the encoding of the code blocks after the editing is performed by the same method as that is performed for the initial codestream to the image, and the original codestream and the codestream of the same form are created (step S3).

Some examples of the edit processing performed in the present embodiment may include color modification, image composition, etc. The newly created codestream after the edit processing is sent to the codestream control unit 33.

In the codestream control unit 33, the codestream of the block unit of the origin which is not an editing object, and the codestream of the block unit newly created with the block-basis edit processing unit 32 are combined, and the codestream by which format adjustment was carried out as a whole is created.

Although various methods about the coupling method of the codestream in this case can be considered, it is desirable suitable to make unit proper selection according to a code amount.

FIG. 19 shows the composition of the codestream control unit 33 in the present embodiment.

In this embodiment, the combining unit 52 performs combining scheme A when the code amount after the editing is larger than the code amount before the editing, and the combining unit 53 performs combining scheme B when the code amount after the editing is smaller than the code amount before the editing. One of the combining units 52 and 53 is chosen by the selector 54, and the codestream after the editing is created. The code amount comparison unit 51 detects which of the code amount before the editing and the code amount after the editing is larger, and one of the combining units 52 and 53 is chosen by the selector 54 based on a result of the code amount detection. The combining processing is not subjected to the non-edited portion of the codestream (or the blocks of the codestream which are not designated for the edit processing.

If the above processing is performed, only the particular code data of the codestream can be processed. Since the whole codestream is controllable, it is possible to perform the insertion method of the new codestream after the editing by the shortest processing time, referring to the codestream before the editing, and high-speed edit processing can be realized.

Various methods can be considered about a concrete unit of code data combination to combine the code data of the blocks of the initial codestream which is not an editing object in codestream control unit 33, and the codestream of the newly created block unit after the editing.

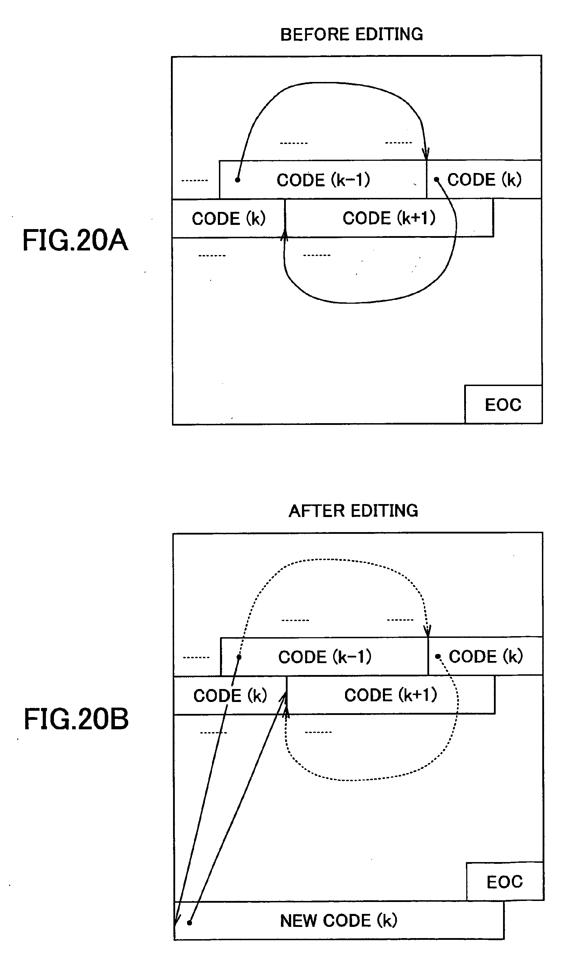

The codestream control unit 33 (or the combining unit 52) in this embodiment is provided to perform, when the amount of the edited code data of the newly created block is larger than the amount of the initial code data of that block before the editing, the combining such that the edited code data of the newly created block is added to the tail end of the new codestream as shown in FIG. 20B.

As shown in FIG. 20A, before the editing, the identification information showing the portion being added to the last of the codestream is put in, and the start address of the added codestream is put into a part for the codestream part of FIG. 20B.

If it is carried out like this, access will become possible at high speed to the added codestream (in consideration of the rearrangement of the whole codestream, it is considered as the regular codestream corresponding to the image of the block unit of FIG. 20B after the editing).

As for a codestream format, it is desirable that the original header information is not rewritten even if the above-mentioned processing is performed.

According to this method, in order to insert a codestream in the original position, the problem of processing in which the data after it must be relocated is lost, and can realize high-speed edit processing.

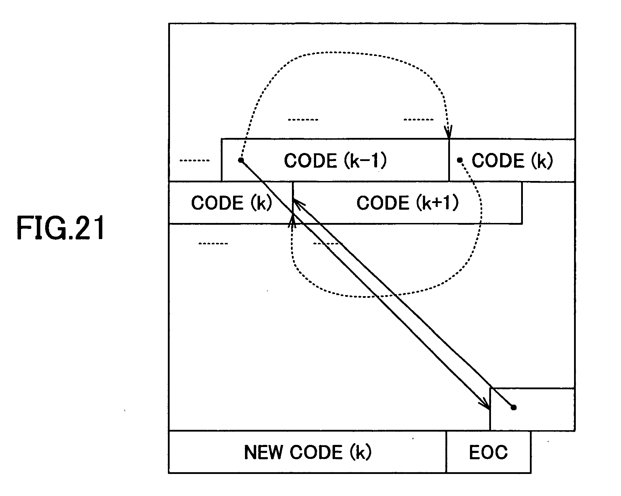

Although a new code data has been arranged immediately after the tail end of the codestream in the example of FIG. 20B, it may be inserted just before the tail end of the codestream as shown in FIG. 21.

However, it is necessary to operate code length's information in the codestream of the last block unit (for the code length of a new codestream to be added to the code length of the last codestream), and to carry out format adjustment as the whole codestream in that case.

The codestream control unit 33 (or the code amount comparison unit 51) in this embodiment includes the unit which is provided to perform a compression coding of the edited code data of the created block when the amount of the edited code data after the editing is larger than the amount of the initial code data before the editing, so that the amount of the compressed edited code data does not exceed the amount of the initial code data.

Especially JPEG2000 system is a scalable compression coding algorithm in which lossless and lossy are possible with the same composition, and regulation of the code amount is possible for it without changing the state of the codestream.

If this feature is used, the code amount of the once created codestream can be changed without changing the state of the codestream. Thus, the codestream whose amount is nearest to the code amount before the editing and which provides the highest image quality can be created at high speed.

Under the present circumstances, even when the code amount after the editing does not agree with the code amount before the editing, the header information 42 after the editing is made the same as that in the code amount before the editing. If it is carried out like this, it will be satisfactory as the whole codestream.

It is possible to perform the edit processing of a codestream at high speed, and to create the codestream after the editing at high speed. However, from a viewpoint of a codestream format, the redundant portion will exist in the new codestream which should exist essentially.

For example, the codestream created by processing when there are many code amounts of the block after the edit explained with reference to FIG. 20A, FIG. 20B and FIG. 21, the codestream after the editing exists in the form added to a tail.

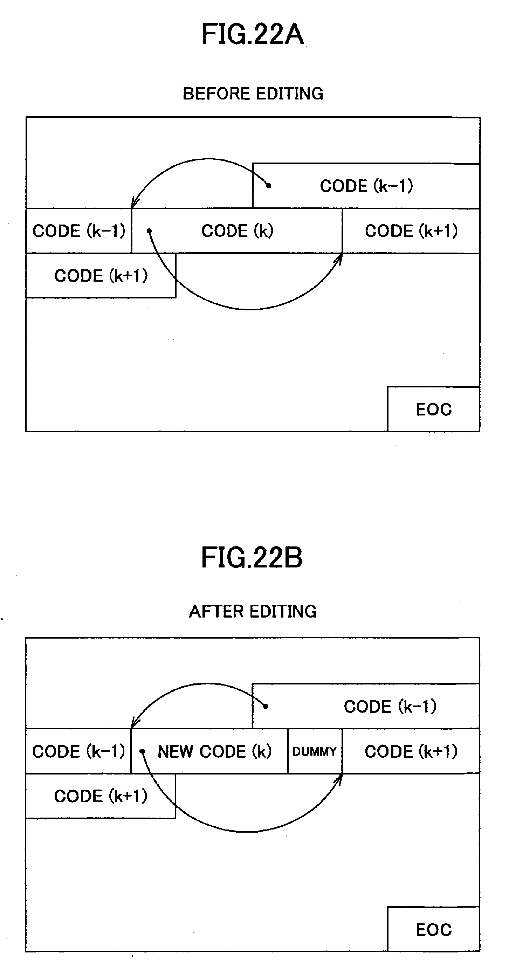

FIG. 22A and FIG. 22B are diagrams for explaining an example of the processing of the image processing device of this embodiment when the amount of the code block after the editing is smaller than the amount of the code block before the editing.

When the amount of the code block after the editing is smaller than the amount of the code block before the editing, the codestream control unit 33 (or the combining unit 53) performs the combining such that a dummy code data (meaningless code data) is added to a part of the created block which is not filled with the edited code data as shown in FIG. 22B. In this case, the header information of the created block after the editing remains unchanged.

When this point is taken into consideration, it is desirable to maintain the codestream which should exist essentially by rearranging only a required portion of the codestream suitably, if required in consideration of the whole processing time.

The insertion method of the code data after the editing is determined by the codestream control unit 33, taking the whole processing time into consideration, and if required, it is possible that only a necessary part of the codestream be rearranged suitably. According to this method, without reducing the processing speed, it is possible to delete the useless code information, and efficient creation of a new codestream is attained.

Next, a description will be given of the second preferred embodiment of the invention.

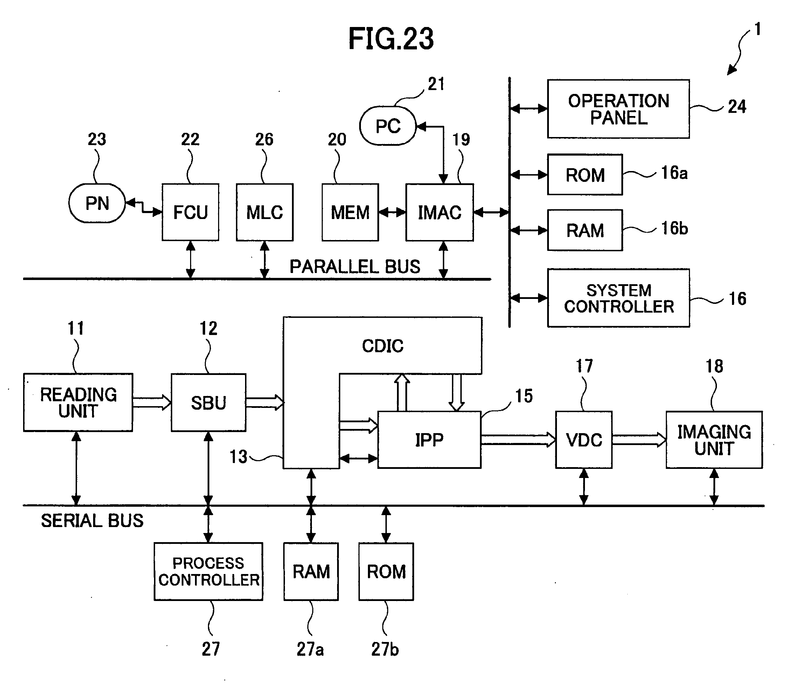

FIG. 23 shows the composition (electric connection) of the copier system 1 in the second preferred embodiment of the invention which carries out the image processing method according to the invention.

The reading unit 11 is a scanner which optically reads the image of an original document, and this reading unit 11 focuses the reflected light of the lamp irradiation light to the original document, onto the photoelectric transducer, such as CCD (charge-coupled device), in association with the optical system including a mirror, a lens, etc.

This photoelectric transducer is carried on the SBU (sensor board unit) 12. In the SBU 12, the image signal from the reading unit 11 is converted into an electrical signal by the photo detector, and this electrical signal is converted into a digital image data. Then, the SBU 12 outputs this digital image data to the CDIC (compression/decompression and data interface control unit) 13.

The digital image data outputted from the SBU12 is inputted into the CDIC 13. The CDIC 13 controls the transmission of all the image data between the functional devices and the data bus. With respect to the image data, the CDIC 13 carries out the data transfer between the SBU 12, the parallel bus 14, and the IPP (image-processing processor) 15, and carries out the communication of image data between the CDIC 13 and the system controller (CPU) 16, which controls the whole copier system, and between the CDIC 13 and the process controller 27. Reference numerals 16a and 16b denote the ROM and RAM which are used by the system controller **16.**

The image signal from the SBU 12 is also transmitted to the IPP 15 through the CDIC 13, and the IPP 15 corrects the signal degradation (the signal degradation of the scanner system) accompanied with the quantization to the digital image signal and the optical system. The resulting image signal is again outputted to the CDIC 13.

In the copier system 1, there are a job which stores the image read by the reading unit 11 in the memory and reuses the stored image, and a job which is not subjected to the storing of the image in the memory. Each of the jobs will be explained.

An example of the job storing the image in the memory, when copying two or more sheets of the same document, reading operation of the original document is performed only once by the reading unit 11, it stores in memory, and there is usage which reads accumulation data two or more times. Since what is necessary is just to print the read image as it is as an example in which the memory is not used when copying only one sheet of the document, it is not necessary to perform the memory access.

First, when the memory is not used, the image data transmitted to the CDIC 13 from the IPP 15 are again returned to the IPP 15 from the CDIC 13. The quality-of-image processing for converting the luminance data based on the photo detector into the area gradation data is performed by the IPP 15. The image data after the quality-of-image processing are transmitted to the VDC (video data controller) 17 from the IPP 15.

And pulse control for reproducing the after treatment and the dot about dot arrangement is performed to the image data which are converted to the area gradation data, and a reproduced image is formed on a copy sheet by the imaging unit 18 which is the printer engine which carries out image formation by the electrophotographic printing method.

Besides the electrophotographic printing method, any of various printing methods, such as inkjet printing method, sublimated type thermal printing method, film photo method, direct thermal printing method, and melting type thermal printing method, can be used for the printing method of the imaging unit 18.

The flow of image data when the image data are stored in the memory and additional processing (for example, image rotation, image composition, etc.) is performed at the time of reading out of the image data stored will be explained.

The image data transmitted to the CDIC 13 from the IPP 15 are sent to the IMAC (Image Memory Access Control) 19 via the parallel bus 14 from the CDIC 13. In the IMAC 19, the access control of the MEM (memory module) 20 which is the storage of the image data, the expansion of the image data for printing out to an external PC (personal computer) 21, and the compression/decompression of the image data for making effective use of the MEM 20 are performed based on the control of the system controller 16. The image data sent to the IMAC 19 are stored in the MEM 20 after the data compression, and this accumulated image data is read out, if needed. The read image data are expanded and reconstructed to the original image data, and the reconstructed image data are returned to the CDIC 13 via the parallel bus from the IMAC 19.

After the image data is transmitted to the IPP 15 from the CDIC 13, the image data is subjected to the quality-of-image processing and the pulse control of the VDC 17. Finally, an image is formed on a copy sheet in the imaging unit 18 in accordance with the processed image data.

The copier system 1 is a multi-function peripheral device and is provided with the FAX transmission function. When the FAX transmission function is used, the image processing of the read image data is performed by the IPP 15, and the processed image data is transmitted to the FCU (FAX control unit) 22 through the CDIC 13 and the parallel bus 14. Data conversion to the communication network is performed by the FCU 22, and the converted image data is transmitted to the PN (public network) 23 as the FAX data.

When the FAX reception function is used, the signal received from the PN 23 is converted into the image data by the FCU 22, and the resulting image data is transmitted to the IPP 15 through the parallel bus 14 and the CDIC 13. In this case, any special image processing is not performed, but the dot relocation and pulse control are performed by the VDC 17, and a reproduced image is formed on a copy sheet by the imaging unit 18.

Under the situation in which a plurality of jobs, such as a copy function, a FAX transmission function and a print output function, are operated in parallel, the allocation of the access control rights of the reading unit, the imaging unit and the parallel bus 14 to the plurality of jobs is controlled by the system controller 16 and the process controller 27.

The process controller (CPU) 27 controls the flow of image data, and the system controller 16 controls the whole copier system and manages starting of the respective resources. Reference numerals 27a and 27b denote the RAM and the ROM used by the process controller 27 respectively.

The user chooses any of various kinds of functions by carrying out the selection input of the control panel 24, and sets up the contents of processing, such as a copy function and a facsimile function.

The system controller 16 and the process controller 27 communicate with each other through the parallel bus 14, the CDIC 13, and the serial bus 25. Under the present circumstances, data format conversion for the data interface of the parallel bus 14 and the serial bus 25 is performed by the CDIC 13.

The MLC (Media Link Controller) 26 realizes the function of the code translation of image data. Transform (for example, the JPEG system) to another compression coding algorithm which is used by the IMAC 19, the compression coding algorithm specifically used by the CDIC 13 and the coding is performed.

In the copier system 1 of the present embodiment, the system controller 16 controls the image-processing processor 15, and the edit processing of the codestream mentioned above with reference to FIGs. 16 — 22B is performed by the image-processing processor 15 in accordance with the operation of the control panel 24. Therefore, the contents of the processing are essentially the same as those of the first preferred embodiment, and a detailed description thereof will be omitted.

## Claims

1. An image processing device comprising:

   a block-basis edit processing unit (32) performing a block-basis edit processing of specific blocks in an initial codestream of compression coded image data in a predetermined format to create blocks of edited code data; and
   a codestream control unit (33) combining the edited code data of the blocks created by the block-basis edit processing unit and non-edited code data of remaining blocks in the initial codestream which are not subjected to the edit processing, to create a new codestream of edited compression coded image data.

2. The image processing device according to claim 1 wherein the codestream control unit (33) comprises a plurality of combining units (52, 53) and a selecting unit (54), and the selecting unit selects one of the plurality of combining units which performs said combining of the edited code data of the created blocks and the non-edited code data of the remaining blocks, in response to a change of an amount of the edited code data of each created block after the edit processing from an amount of initial code data of the corresponding block before the edit processing.

3. The image processing device according to claim 2 wherein, when the amount of the edited code data of each created block after the edit processing is larger than the amount of the initial code data of the corresponding block before the edit processing, the codestream control unit (33) performs said combining such that the edited code data of the created block is added to a tail end of the new codestream.

4. The image processing device according to claim 2 wherein, when the amount of the edited code data of each created block after the edit processing is larger than the amount of the initial code data of the corresponding block before the edit processing, the codestream control unit (33) performs a compression coding of the edited code data of the created block, so that an amount of the compressed edited code data does not exceed the amount of the initial code data.

5. The image processing device according to claim 2 wherein, when the amount of the edited code data of each created block after the edit processing is smaller than the amount of the initial code data of the corresponding block before the edit processing; the codestream control unit (33) performs said combining such that a dummy code data is added to a part of the created block which is not filled with the edited code data.

6. The image processing device according to claim 1 wherein the predetermined format is in conformity with JPEG2000 algorithm.

7. A computer program product embodied therein for causing a computer to execute an image processing method, the image processing method comprising the steps of:

   performing a block-basis edit processing of specific blocks in an initial codestream of compression coded image data in a predetermined format to create blocks of edited code data; and
   combining the edited code data of the blocks created in the block-basis edit processing step and non-edited code data of remaining blocks in the initial codestream which are not subjected to the edit processing, to create a new codestream of edited compression coded image data.

8. The computer program product according to claim 7 further comprising the step of selecting one of a plurality of combining units which performs said combining of the edited code data of the created blocks and the non-edited code data of the remaining blocks, in response to a change of an amount of the edited code data of each created block after the edit processing from an amount of initial code data of the corresponding block before the edit processing.

9. The computer program product according to claim 8 wherein, when the amount of the edited code data of each created block after the edit processing is larger than the amount of the initial code data of the corresponding block before the edit processing, said combining is performed such that the edited code data of the created block is added to a tail end of the new codestream.

10. The computer program product according to claim 8 wherein, when the amount of the edited code data of each created block after the edit processing is larger than the amount of the initial code data of the corresponding block before the edit processing, a compression coding of the edited code data of the created block is performed, so that an amount of the compressed edited code data does not exceed the amount of the initial code data.

11. The computer program product according to claim 8 wherein, when the amount of the edited code data of each created block after the edit processing is smaller than the amount of the initial code data of the corresponding block before the edit processing, said combining is performed such that a dummy code data is added to a part of the created block which is not filled with the edited code data.

12. The computer program product according to claim 7 wherein the predetermined format is in conformity with JPEG2000 algorithm.

13. A computer-readable recoding medium embodied therein for causing a computer to act as an image processing device, the image processing device comprising:

a block-basis edit processing unit (32) performing a block-basis edit processing of specific blocks in an initial codestream of compression coded image data in a predetermined format to create blocks of edited code data; and a codestream control unit (33) combining the edited code data of the blocks created by the block-basis edit processing unit and non-edited code data of remaining blocks in the initial codestream which are not subjected to the edit processing, to create a new codestream of edited compression coded image data.

# FIG.1

IMAGE DATA

101 — COLOR SPACE TRANSFORM/ INVERSE-TRANSFORM UNIT

102 — 2D WAVELET TRANSFORM/ INVERSE-TRANSFORM UNIT

103 — QUANTIZER/ INVERSE-QUANTIZER UNIT

104 — ENTROPY ENCODER/ DECODER UNIT

105 — TAG PROCESSING UNIT

CODESTREAM

COMPRESSION

EXPANSION

# FIG.2

EP 1 635 576 A1

111

B COMPONENT

| B00 | B01 | B02 | B03 |
|-----|-----|-----|-----|
| B04 | B05 | B06 | |
| B08 | B09 | B10 | |
| B12 | B13 | B14 | |

112

111

G COMPONENT

| G00 | G01 | G02 | G03 |
|-----|-----|-----|-----|
| G04 | G05 | G06 | |
| G08 | G09 | G10 | |
| G12 | G13 | G14 | |

112

111

R COMPONENT

| R00 | R01 | R02 | R03 |
|-----|-----|-----|-----|
| R04 | R05 | R06 | R07 |
| R08 | R09 | R10 | R11 |
| R12 | R13 | R14 | R15 |

112

# FIG.3

OLL

(TILE OF ORIGINAL IMAGE )

DECOMPOSITION LEVEL-0

| 1LL | 1HL |
|-----|-----|
| 1LH | 1HH |

DECOMPOSITION LEVEL-1

| 2LL | 2HL |
|-----|-----|
| 2LH | 2HH |

DECOMPOSITION LEVEL-2

3LL  3HL

3LH

3HH

DECOMPOSITION LEVEL-3

# FIG.4

TILE (#0)

TILE (#1)

1HL

CODE BLOCK (#1)
DECOMPOSITION LEVEL (#1)

1LH

PRECINCT (#4)
DECOMPOSITION LEVEL (#1)

PRECINCT (#6)
DECOMPOSITION LEVEL (#1)

TILE (#2)

TILE (#3)

## DECOMPOSITION LEVEL-1

# FIG.5

PRECINCT

PRECINCT

TILE          TILE

PRECINCT

PRECINCT

TILE          TILE

| -85 | -80 | -80 | -70 |
| -86 | -82 | -80 | -76 |
| -83 | -83 | -78 | -75 |
| -84 | -85 | -85 | -78 |

PIXEL VALUE

### WAVELET TRANSFORM

FILTER : REVERSIBLE (5, 3)
        INTEGER TRANSFORM FILTER,
PIXEL EXTENSION : MIRRORING METHOD

TILE NO. = 0
PRECINCT NO. = 3
CODE BLOCK NO. = 3

| -84 | -77 | 1 | 8 |
| LL | | HL | |
| -84 | -79 | -1 | 4 |
| -1 | -1 | 2 | -2 |
| LH | | HH | |
| 0 | -5 | 2 | 4 |

### WAVELET COEFFICIENT VALUE

DECOMPOSITION LEVEL NO. = 1
TILE NO. = 0
PRECINCT NO. = 3
CODE BLOCK NO. = 3

|  | -84 | -84 | -77 | -79 |  | 1 | -1 | 8 | 4 | ← COEFFICIENT VALUE |
| LAYER NO. = 0 | - | - | - | - |  | + | - | + | + | ← COEFFICIENT SIGN |
| LAYER NO. = 1 | 1 | 1 | 1 | 1 |  | 0 | 0 | 0 | 0 | (MSB) |
|  | 0 | 0 | 0 | 0 |  | 0 | 0 | 0 | 0 |  |
|  | 1 | 1 | 0 | 0 |  | 0 | 0 | 0 | 0 |  |
| LAYER NO. = 2 | 0 | 0 | 1 | 1 |  | 0 | 0 | 1 | 0 | ABSOLUTE VALUE |
| LAYER NO. = 3 | 1 | 1 | 1 | 1 |  | 0 | 0 | 0 | 1 |  |
|  | 0 | 0 | 0 | 1 |  | 0 | 0 | 0 | 0 |  |
|  | 0 | 0 | 1 | 1 |  | 1 | 1 | 0 | 0 | (LSB) |
|  | 1LL | | | |  | 1HL | | | |  |

| -1 | 0 | -1 | -5 |  | 2 | 2 | -2 | 4 |
| - | 0 | - | - |  | + | + | - | + |
| 0 | 0 | 0 | 0 |  | 0 | 0 | 0 | 0 |
| 0 | 0 | 0 | 0 |  | 0 | 0 | 0 | 0 |
| 0 | 0 | 0 | 0 |  | 0 | 0 | 0 | 0 |
| 0 | 0 | 0 | 0 |  | 0 | 0 | 0 | 0 |
| 0 | 0 | 0 | 1 |  | 0 | 0 | 0 | 1 |
| 0 | 0 | 0 | 0 |  | 1 | 1 | 1 | 0 |
| 1 | 0 | 1 | 1 |  | 0 | 0 | 0 | 0 |
| 1LH | | | |  | 1HH | | | |

# FIG.6

| MAIN HEADER | TILE-PART HEADER | BIT STREAM |
|---|---|---|

| | TILE-PART HEADER | BIT STREAM |
|---|---|---|

| | TILE-PART HEADER | BIT STREAM |
|---|---|---|

| | TILE-PART HEADER | BIT STREAM | |
|---|---|---|---|

END OF CODESTREAM

# FIG.7

| SOC | MAIN HEADER |
|---|---|

| SOT | TILE HEADER | SOD | | TILE DATA | |
|---|---|---|---|---|---|

| SOT | TILE HEADER | SOD | | TILE DATA | | | |
|---|---|---|---|---|---|---|---|

| SOT | TILE HEADER | SOD | | TILE DATA | | EOC |
|---|---|---|---|---|---|---|

# FIG.8

SOC → SIZ

| | | |
|---|---|---|
| ← | COD | CODING STYLE DEFAULT |
| ← | COC | CODING STYLE COMPONENT |
| ← | QCD | QUANTIZATION DEFAULT |
| ← | QCC | QUANTIZATION COMPONENT |
| ← | RGN | REGION OF INTEREST SHIFT |
| ← | POC | DEFAULT PROGRESSIVE SEQUENCE |
| ← | PPM | PACKED PACKET HEADERS, MAIN HEADER |
| ← | TLM | TILE-PART LENGTHS, MAIN HEADER |
| ← | PLM | PACKET LENGTH, MAIN HEADER |
| ← | CRG | COLOR DEFINITION |
| ← | COM | COMMENT |

# FIG.9A

SOT

← COD
← COC
← QCD
← QCC
← RGN
← POC
← PPT
← PLT
← COM

SOD

# FIG.9B

SOT

← POC
← PPT
← PLT
← COM

SOD

**FIG.10**

| SOT | Lsot | Isot | Psot | TPsot | TNsot |
|---|---|---|---|---|---|

**FIG.11**

| SIZ | Isiz | Rsiz | Nsiz | Ysiz |
|---|---|---|---|---|

| XOsiz | YOsiz | XTsiz | YTsiz |
|---|---|---|---|

| XTOsiz | YTOsiz | Csiz | Ssiz (1) | XRsiz (1) | YRsiz (1) | ... | Ssiz (n) | XRsiz (n) | YRsiz (n) |
|---|---|---|---|---|---|---|---|---|---|

# FIG.12

# FIG.13

# FIG.14

PRECINCT

CODE BLOCK

PRECINCT

PRECINCT

IMAGE
(TILE)

SUB-BAND

3LL

2HL

2LH 2HH

1HL

1LH 1HH

# FIG.15

92
CPU

91

93
MEMORY

94

95
HDD

96
INPUT
DEVICE

97
DISPLAY
DEVICE

99
DISK
DRIVE

98

101
NETWORK
INTERFACE

100

# FIG.16

CODESTREAM
BEFORE EDITING
→
BLOCK–BASIS
DETECTING
UNIT  _31

CODE BLOCKS
NOT DESIGNATED
FOR EDITING
→
CODESTREAM
CONTROL UNIT  _33
→
CODESTREAM
AFTER EDITING

CODE BLOCKS
DESGINATED
FOR EDITING
→
BLOCK–BASIS
EDIT
PROCESSING
UNIT  _32
→
CODE
BLOCKS
AFTER
EDITING

# FIG.17

TILE DATA LENGTH (L1)

| HEADER | TILE DATA | HEADER | TILE DATA | ·············· |
|--------|-----------|--------|-----------|----------------|

42    41    42    41

| HEADER NUMBER | TILE DATA LENGTH (L1) | ·············· |
|---------------|------------------------|----------------|

43    44

EP 1 635 576 A1

# FIG.18

```
        ┌─────────────┐
        │   START     │
        └─────────────┘
               │
    ┌──────────────────────────────────┐
S1  │ JPEG 2000 CODE BLOCK OF CONCERN  │
    │ IS DECODED TO CREATE BLOCK-BASIS │
    │        IMAGE DATA                 │
    └──────────────────────────────────┘
               │
    ┌──────────────────────────────────┐
S2  │ IMAGE DATA CREATED IS SUBJECTED TO│
    │        EDIT PROCESSING            │
    └──────────────────────────────────┘
               │
    ┌──────────────────────────────────┐
S3  │ EDITED IMAGE DATA IS ENCODED AGAIN│
    │   TO CREATE JPEG 2000 CODE BLOCK  │
    └──────────────────────────────────┘
               │
        ┌─────────────┐
        │    END      │
        └─────────────┘
```

# FIG.19

33

51                                                              54

CODE
BLOCK
BEFORE
EDITING

NO PROCESSING IS NEEDED

52

┌─────────────┐          ┌─────────────────────────┐          ┌──────────┐
│    CODE     │          │   COMBINING UNIT        │          │          │
│   AMOUNT    │ ───────► │ (IN CASE AMOUNT OF      │ ───────► │ SELECTOR │
│ COMPARISON  │ ──────►  │  CODE BLOCK AFTER       │          │          │
│             │          │  EDITING IS LARGER)     │          │          │
│             │          └─────────────────────────┘          │          │
│             │          ┌─────────────────────────┐          │          │
│             │ ───────► │   COMBINING UNIT        │          │          │
│             │ ──────►  │ (IN CASE AMOUNT OF      │ ───────► │          │
│             │          │  CODE BLOCK AFTER       │          │          │
│             │          │  EDITING IS SMALLER)    │          │          │
└─────────────┘          └─────────────────────────┘          └──────────┘

CODE
BLOCK
AFTER
EDITING

53

BEFORE EDITING

**FIG.20A**

CODE (k-1)    CODE (k)

CODE (k)    CODE (k+1)

EOC

AFTER EDITING

**FIG.20B**

CODE (k-1)    CODE (k)

CODE (k)    CODE (k+1)

EOC

NEW CODE (k)

FIG.21

## FIG.22A

BEFORE EDITING

## FIG.22B

AFTER EDITING

# FIG.23

EP 1 635 576 A1

**European Patent Office**

**EUROPEAN SEARCH REPORT**

Application Number

EP 05 01 9975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 233 624 A (RICOH COMPANY, LTD) 21 August 2002 (2002-08-21) * abstract * * paragraph [0130] - paragraph [0137] * ----- | 1-13 | H04N7/26 |
| X | MARCELLIN M W ET AL: "AN OVERVIEW OF JPEG-2000" DATA COMPRESSION CONFERENCE, PROCEEDINGS. DCC, IEEE COMPUTER SOCIETY PRESS, LOS ALAMITOS, CA, US, 28 March 2000 (2000-03-28), pages 523-541, XP000992351 * abstract * * page 14, paragraph 5.4 * ----- | 1-4, 6-10,12, 13 | |
| X | EP 1 400 929 A (RICOH COMPANY, LTD) 24 March 2004 (2004-03-24) * abstract * * paragraph [0008] - paragraph [0018] * * paragraph [0047] - paragraph [0057] * * claims 1,4,8-10,12,14; figures 9-13 * ----- | 1,2,6-8, 12,13 | |

TECHNICAL FIELDS SEARCHED (IPC)

H04N

The present search report has been drawn up for all claims

| Place of search | Date of completion of the search | Examiner |
|---|---|---|
| Berlin | 16 January 2006 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 635 576 A1**

## ANNEX TO THE EUROPEAN SEARCH REPORT
## ON EUROPEAN PATENT APPLICATION NO.

EP 05 01 9975

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2006

| Patent document cited in search report | | | Publication date | Patent family member(s) | | | Publication date |
|---|---|---|---|---|---|---|---|
| EP 1233624 | | A | 21-08-2002 | JP | 2002359850 | A | 13-12-2002 |
| | | | | US | 2002168112 | A1 | 14-11-2002 |
| | | | | US | 2003206656 | A1 | 06-11-2003 |
| | | | | US | 2004028284 | A1 | 12-02-2004 |
| | | | | US | 2003206661 | A1 | 06-11-2003 |
| EP 1400929 | | A | 24-03-2004 | JP | 2004112526 | A | 08-04-2004 |
| | | | | US | 2004136597 | A1 | 15-07-2004 |

EPO FORM P0459

For more details about this annex : see Official Journal of the European Patent Office, No. 12/82

32